# EUROPÄISCHE PATENTSCHRIFT

(11) **EP 2 066 836 B1**
(45) Veröffentlichungstag und Bekanntmachung des Hinweises auf die Patenterteilung: **09.06.2010**
(21) Anmeldenummer: 07800634.3
(22) Anmeldetag: 11.09.2007
(51) Int. Cl.: D06H 1/04, G08B 13/24, G06K 19/077

(54) **RFID-TEXTILETIKETTE**
RFID TEXTILE LABEL
ÉTIQUETTES RFID DESTINÉES AUX ARTICLES TEXTILES

(30) Priorität: 18.09.2006 CH 14762006
(43) Veröffentlichungstag der Anmeldung: 10.06.2009
(73) Patentinhaber: TEXTILMA AG, 6362 Stansstad (CH)
(72) Erfinder: SPEICH, Francisco, CH-5073 Gipf-Oberfrick (CH)
(74) Vertreter: Schmauder & Partner AG Patent- & Markenanwälte VSP
(86) Internationale Anmeldenummer: PCT/CH2007/000443
(87) Internationale Veröffentlichungsnummer: WO 2008/034269

(56) Entgegenhaltungen:
- WO-A-2005/054565
- WO-A-2006/029543
- WO-A-2006/055653
- WO-A1-01/71848
- DE-A-102005 008 397
- US-A1- 2004 233 042
- US-A1- 2006 043 198
- US-A1- 2006 049 947

## Beschreibung

### Technisches Gebiet

Die Erfindung betrifft eine RFID-Textiletikette gemäss Oberbegriff des Anspruches 1.

### Stand der Technik

Aus der WO02/093524 A ist eine RFID-Textiletikette bekannt mit einer auf einem Träger angeordneten offenen Antenne, die mit einem RFID-Chip verbunden ist. Diese Antenne ist als Dipolantenne ausgebildet, welche durch den RFID-Chip in zwei Hälften unterteilt wird und als E-Feldantenne dient, die für eine Arbeitsfrequenz im UHF- oder Mikrowellenbereich ausgebildet ist. Solche E-Feldantennen bilden zusammen mit dem RFID-Chip einen Transponder, der für kurze Reichweiten nicht geeignet ist.

In der US 2006/0043198 A1 werden verschiedene Formen von kapazitiver und induktiver Kopplung eines RFID-Chips an eine Dipolantenne (E-Feld Antenne) bzw. an eine Schleifenantenne (H-Feld Antenne) beschrieben. Diese Formen erscheinen für die Anwendung bei textilen Etiketten eher weniger geeignet zu sein.

In der DE-A-102005008397 (Oberbegriff des Anspruchs 1) wird eine RFID-Textiletikette vorgeschlagen, bei der eine in einen textilen Träger eingewobene offene Antenne mit einem RFID-Chip verbunden ist. Eine Textiletikette mit einem eingearbeiteten Antennenfaden für einen RF-Transponder ist grundsätzlich schon aus der WO-A-2006/029543 bekannt.

### Darstellung der Erfindung

Aufgabe der Erfindung ist es, eine RFID-Textiletikette der eingangs genannten Art zu verbessern, die auch für kurze Entfernungen geeignet ist.

Die Aufgabe wird gelöst, durch die RFID-Textiletikette gemäss Anspruch 1.

Dadurch, dass die Antenne eine Schlaufe aufweist, an deren Flanken der RFID-Chip direkt - durch Schweissen, Löten oder Kleben mit einem elektrisch leitenden Kleber - oder indirekt - durch kapazitive oder induktive Ankopplung - angeschlossen ist, wobei die mit dem RFID-Chip versehene Antennenschlaufe als H-Feldantenne und die ausserhalb der Antennenschlaufe liegenden Antennenabschnitte als E-Feldantenne dienen, wird eine RFID-Textiletikette zur Verfügung gestellt, welche durch die E-Feldantenne einen Fernbereich von beispielsweise bis 10 Meter und durch die H-Feldantenne einen Nahbereich von beispielsweise kleiner als 1 Meter abdeckt.

Der textile Träger ist als ein Gewebe oder Gewirke ausgebildet und die Antenne ist im Zuge der Herstellung des Gewebes oder Gewirkes meanderförmig auf einer Webmaschine mit eingewoben.

Die H-Feldantenne spricht beispielsweise hauptsächlich auf magnetische Wellen und die E-Feldantenne hauptsächliche auf elektrische Wellen an. Die magnetischen Wellen sind bezüglich der elektrischen Wellen phasenverschoben. Der aus RFID-Chip und Antenne zusammengesetzte Transponder ist im Falle einer RFID-Textiletikette in aller Regel ein passiver Transponder, der nur aktiv wird, wenn er mit H- oder E-Wellen beaufschlagt wird. Er bezieht seine elektrische Energie zum Empfangen und Senden aus den elektromagnetischen Wellen, die auch als Strahlen bezeichnet werden.

Vorteilhafte Ausgestaltungen der RFID-Textiletikette sind in denn Ansprüchen 2 bis 8 beschrieben.

Eine besonders einfache Lösung bietet der Anspruch 2, wonach der RFID-Chip mit den Flanken der Antennenschlaufe fest verbunden ist.

Gemäss Anspruch 3 ist es aber auch möglich, den RFID-Chip auf einem Hilfsträger an den Enden einer Leiterschlaufe anzuordnen, die mindestens abschnittweise mit geringem Abstand parallel zur Antennenschlaufe verläuft und induktiv mit dieser gekoppelt ist. Gemäss Anspruch 4 ist es ferner möglich, den RFID-Chip auf einem Hilfsträger an den Enden einer Leiterschlaufe anzuordnen, wobei die Leiterschlaufe mindestens an zwei Stellen die Antenne überlappt oder durchkreuzt und teilweise mit Abstand mit dieser parallel verläuft und induktiv mit dieser gekoppelt ist.

Eine weitere Möglichkeit besteht gemäss Anspruch 5 darin, dass die Antennenschlaufe von der übrigen Antenne abgetrennt und mit einem weiteren RFID-Chip verbunden ist.

Im Falle der Verwendung eines Hilfsträgers bei der Anordnung des Chips und der Leiterschlaufe kann der Hilfsträger gemäss Anspruch 6 aus Kunststoff bestehen.

Gemäss Anspruch 7 kann die Antenne aus einem metallischen Faden gebildet sein. Nach Anspruch 8 ist es aber auch möglich, die Antenne aus einem leitend beschichteten Faden aus einem Polymer zu bilden.

Die vorbenannten sowie die beanspruchten und in den nachfolgenden Ausführungsbeispielen beschriebenen, erfindungsgemäss zu verwendenden Elemente unterliegen in ihrer Grösse, Formgestaltung, Materialverwendung und ihrer technischen Konzeption keinen besonderen Ausnahmebedingungen, so dass die in dem jeweiligen Anwendungsgebiet bekannten Auswahlkriterien uneingeschränkt Anwendung finden können.

### Kurze Beschreibung der Zeichnungen

Weitere Einzelheiten, Vorteile und Merkmale des Gegenstandes der vorliegenden Erfindung ergeben sich aus der nachfolgenden Beschreibung der dazu gehörenden Zeichnungen, in den Zeichnungen zeigen:
- Figur 1: eine erste RFID-Textiletikette mit einer mäanderartig gelegten Antenne und einem RFID-Chip, in Draufsicht;
- Figur 2: die RFID-Textiletikette der Figur 1 im Längsschnitt II-II der Figur 1;
- Figur 3: eine zweite RFID-Textiletikette mit einer mäanderartig gelegten Antenne mit einem RFID-Chip und einer abgetrennten Antennenschlaufe, die mit einem weiteren RFID-Chip verbunden ist, in Draufsicht;
- Figur 4: eine dritte RFID-Textiletikette mit einem RFID-Chip, der induktiv mit der einer Antennenschlaufe verbunden ist, in Draufsicht; und
- Figur 5: die RFID-Textiletikette der Figur 4 im Längsschnitt V-V der Figur 4.

### Wege zur Ausführung der Erfindung

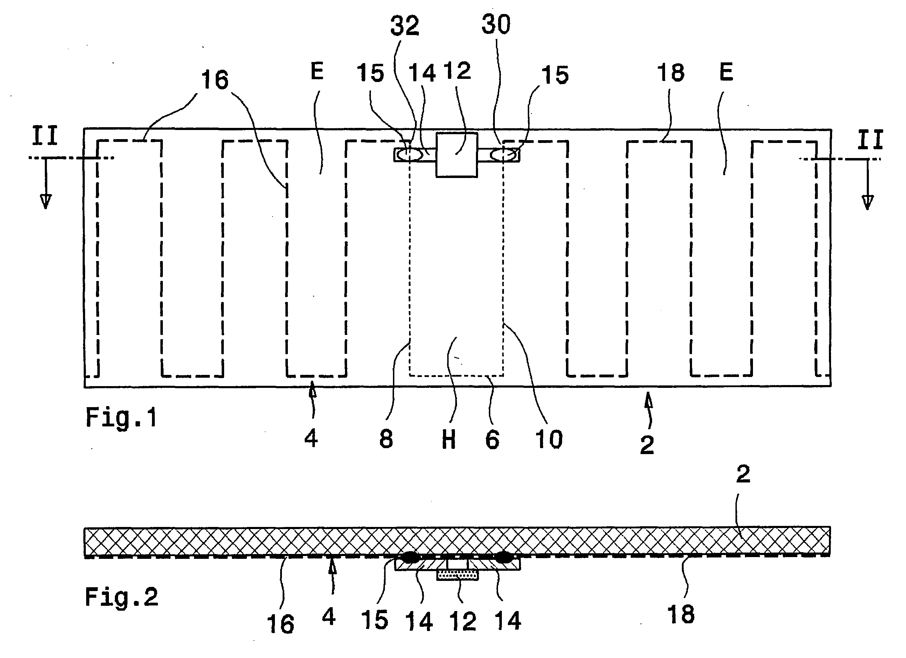

Die Figuren 1 und 2 zeigen ein erstes Ausführungsbeispiel einer RFID-Textiletikette, die einen textilen Träger 2 aus einem Gewebe aufweist, in das eine offene Antenne 4 mäanderartig eingewoben ist. Im mittleren Bereich, das heisst auf halber Länge der Antenne ist eine Schlaufe 6 der Antenne ausgesondert, an deren Flanken 8, 10 ein RFID-Chip 12 mittels Anschlussfüssen 14 befestigt ist. Die Verbindung 15 der Anschlussfüsse 14 mit der Antenne 4 erfolgt beispielsweise durch Schweissen, Löten oder mittels eines elektrisch leitenden Klebstoffes. Die Antennenschlaufe 6 bildet eine H-Feldantenne für den Nahbereich und die ausserhalb der Antennenschlaufe 6 liegenden Antennenabschnitte 16, 18 dienen als E-Feldantenne für den Fernbereich.

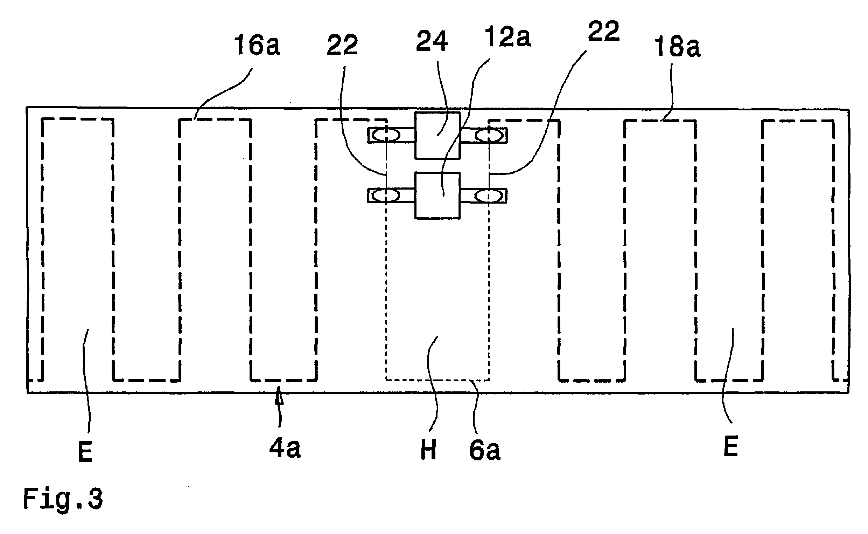

Die Figur 3 zeigt eine weitere RFID-Textiletikette, welche im Prinzip wie jene der Figuren 1 und 2 aufgebaut ist, wobei jedoch die Antennenschlaufe 6a der Antenne 4a von den Antennenabschnitten 16a, 18a durch Unterbrechungen 20, 22 abgetrennt ist. Der RFID-Chip 24 ist mit den Antennenabschnitten 16a, 18a verbunden und deckt den Fernbereich durch das E-Feld ab. Die Antennenschlaufe 6a ist an ihren Enden mit einem RFID-Chip 12a verbunden, der auf den Nahbereich H anspricht.

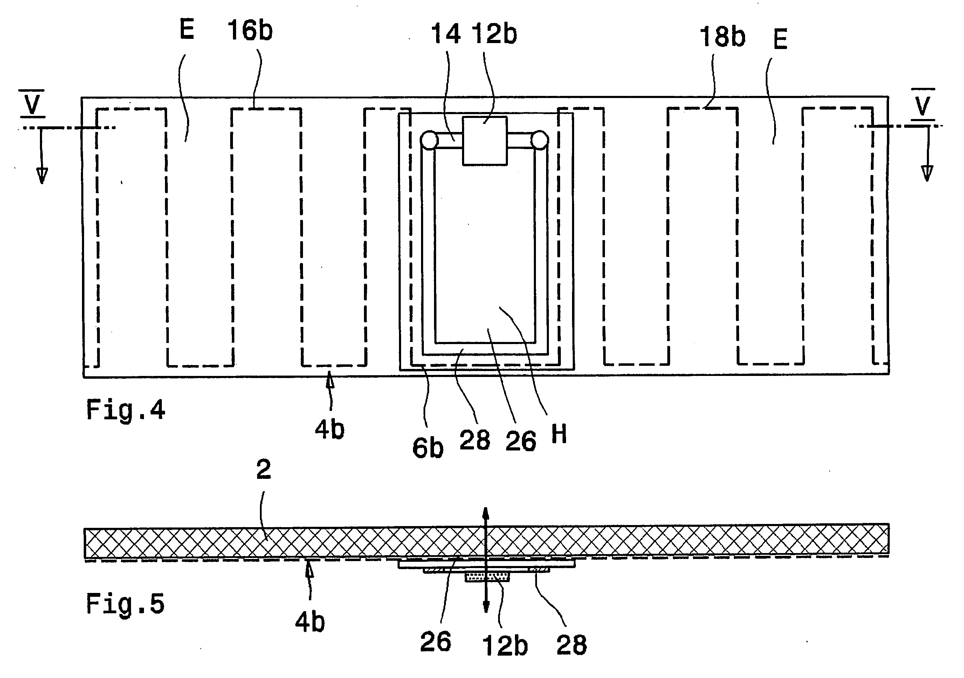

Die Figuren 4 und 5 zeigen eine dritte RFID-Textiletikette, die analog den vorhergehenden Beispielen einen Träger 2 aufweist, in dem eine Antenne 4b mäanderartig angeordnet ist, die wiederum in Antennenabschnitt 16b, 18b für den Fernbereich E und eine ausgesonderte Antennenschlaufe 6b für den Nahbereich H unterteilt ist. Der RFID-Chip 12b ist in diesem Beispiel nicht direkt mit der Antenne 4b verbunden sondern indirekt induktiv. Hierzu ist der RFID-Chip 12b auf einem Hilfsträger 26 angeordnet, der auch eine Leiterschlaufe 28 trägt, die im Wesentlichen parallel zur Antennenschlaufe 6b verläuft. An den Enden 30, 32 der Leiterschlaufe 28 ist der RFID-Chip12b mittels seiner Anschlussfüsse 14 verbunden. Der den RFID-Chip 12b tragende Hilfsträger ist mit dem Träger 2 beispielsweise durch Verkleben oder eine am Träger 2 angewobene Textiltasche derart verbunden, dass die Leiterschlaufe 28 parallel zur Antennenschlaufe 6b und mit geringem Abstand davon liegt, sodass die von der Antenne 4b empfangene Energie induktiv auf die Leiterschlaufe 28 übertragen wird und im RFID-Chip 12b wirksam wird. Dies gilt sowohl für die Wellen des E-Feldes wie jene des H-Feldes.

Alternativ zur Ausbildung nach den Figuren 4 und 5 kann die Leiterschlaufe die Antennenschlaufe mindestens zwei Mal überlappen oder durchkreuzen und mindestens teilweise mit Abstand mit dieser parallel verläuft.

Für den Nahbereich H und den Fernbereich E können Wellen, das heisst Strahlen verwendet werden, die die gleiche Frequenz oder unterschiedliche Frequenzen aufweisen und beispielsweise im Bereich von 1 bis 2500 MHz liegen. Wesentlich ist, dass bei der vorliegenden Erfindung die Antenne für den Nahbereich H, der beispielsweise kleiner als 1 Meter ist, im Wesentlichen auf den magnetischen Anteil der Wellen anspricht. Die Antenne des Fernbereiches E, der beispielsweise für einen passiven Transponder bis zu 10 Meter reicht; spricht im Wesentlichen auf den elektrischen Anteil der Wellen beziehungsweise Stahlen an, der bezüglich des magnetischen Anteils phasenverschoben ist.

### Bezugszeichenliste

- 2: Träger
- 4: Antenne
- 4a: Antenne
- 4b: Antenne
- 6: Antennenschlaufe
- 6a: Antennenschlaufe
- 6b: Antennenschlaufe
- 8: Flanke
- 10: Flanke
- 12: RFID-Chip
- 12a: RFID-Chip
- 12b: RFID-Chip
- 14.: Anschlussfuss
- 15: Verbindung
- 16: Antennenabschnitt
- 16a: Antennenabschnitt
- 16b: Antennenabschnitt
- 18: Antennenabschnitt
- 18a: Antennenabschnitt
- 18b: Antennenabschnitt
- 20: Unterbrechung
- 22: Unterbrechung
- 24: RFID-Chip
- 26: Hilfsträger
- 28: Leiterschlaufe
- 30: Ende
- 32: Ende

## Patentansprüche

1. RFID-Textiletikette mit einer in einen textilen Träger (2) eingearbeiteten offenen Antenne (4, 4a, 4b), wobei der textile Träger ein Gewebe oder Gewirke und die Antenne im Zuge der Herstellung des Gewebes auf einer Webmaschine meanderförmig mit eingewoben ist, wobei die Antenne (4, 4a, 4b) in ihrem mittleren Bereich mit einem RFID-Chip (12, 12a, 12b, 24) verbunden ist, **dadurch gekennzeichnet, dass** die Antenne (4, 4a, 4b) im mittleren Bereich eine Schlaufe (6, 6a, 6b) aufweist, an deren Flanken (8, 10) der RFID-Chip (12,12a,12b) angeschlossen ist, wobei die an den RFID-Chip angeschlossene Antennenschlaufe (6, 6a, 6b) als H-Feldantenne und die ausserhalb der Antennenschlaufe liegenden Antennenabschnitte (16,16a,16b,18,18a,18b) als E-Feldantenne dienen.

2. RFID-Textiletikette nach Anspruch 1, **dadurch gekennzeichnet, dass** der RFID-Chip (12, 12a) mit den Flanken (8, 10) der Antennenschlaufe (6, 6a) vorzugsweise durch Schweissen, Löten oder Kleben mit einem elektrisch leitenden Kleber fest verbunden ist.

3. RFID-Textiletikette nach Anspruch 1, **dadurch gekennzeichnet, dass** der RFID-Chip (12b) auf einem, Hilfsträger (26) mit einer Leiterschlaufe (28) an deren Enden (30, 32) angeordnet ist, und dass die Leiterschlaufe (28) zur Antennenschlaufe (6b) mindestens abschnittweise mit geringem Abstand parallel verläuft und mit dieser induktiv gekoppelt ist.

4. RFID-Textiletikette nach Anspruch 1, **dadurch gekennzeichnet, dass** der RFID-Chip (12b) auf einem Hilfsträger (26) mit einer Leiterschlaufe (28) an deren Enden (30, 32) angeordnet ist, und dass die Leiterschlaufe (28) mindestens an zwei Stellen die Antenne (4,4a,4b) überlappt oder durchkreuzt und teilweise mit Abstand mit dieser parallel verläuft und untereinander induktiv gekoppelt sind.

5. RFID-Textiletikette nach Anspruch 1, **dadurch gekennzeichnet, dass** die Antennenschlaufe (6a) von der übrigen Antenne abgetrennt und mit einem weiteren RFID-Chip (24) verbunden ist.

6. RFID-Textiletikette nach Anspruch 3, **dadurch gekennzeichnet, dass** der Hilfsträger (26) aus Kunststoff ist.

7. RFID-Textiletikette nach einem der Ansprüche 1 bis 6, **dadurch gekennzeichnet, dass** die Antenne (4,4a,4b) einen metallischen Faden aufweist.

8. RFID-Textiletikette nach einem der Ansprüche 1 bis 6, **dadurch gekennzeichnet, dass** die Antenne (4,4a,4b) einen leitend beschichteten Faden aus einem Polymer aufweist.

## Claims

1. An RFID textile label having an open antenna (4, 4a, 4b) which is incorporated in a textile carrier (2), the textile carrier being a woven fabric or a knitted fabric and the antenna being concomitantly woven in in meandering fashion during the production of the woven fabric on a weaving machine, the antenna (4, 4a, 4b) being connected to an RFID chip (12, 12a, 12b, 24) in its central region, **characterized in that** the antenna (4, 4a, 4b) has, in the central region, a loop (6, 6a, 6b) to whose sides (8, 10) the RFID chip (12, 12a, 12b) is connected, the antenna loop (6, 6a, 6b) which is connected to the RFID chip being used as an H-field antenna and the antenna sections (16, 16a, 16b, 18, 18a, 18b) which are outside the antenna loop being used as an E-field antenna.

2. The RFID textile label as claimed in claim 1, **characterized in that** the RFID chip (12, 12a) is permanently connected to the sides (8, 10) of the antenna loop (6, 6a), preferably by means of welding, soldering or adhesive bonding with an electrically conductive adhesive.

3. The RFID textile label as claimed in claim 1, **characterized in that** the RFID chip (12b) is arranged at the ends (30, 32) of a conductor loop (28) on an auxiliary carrier (26) having said conductor loop, and **in that** at least sections of the conductor loop (28) run parallel to the antenna loop (6b) at a short distance from the latter and the conductor loop is inductively coupled to said antenna loop.

4. The RFID textile label as claimed in claim 1, **characterized in that** the RFID chip (12b) is arranged at the ends (30, 32) of a conductor loop (28) on an auxiliary carrier (26) having said conductor loop, and **in that** the conductor loop (28) overlaps or crosses the antenna (4, 4a, 4b) at at least two places and partially runs parallel to the antenna at a distance from the latter and the conductor loop and the antenna are inductively coupled to one another.

5. The RFID textile label as claimed in claim 1, **characterized in that** the antenna loop (6a) is separated from the rest of the antenna and is connected to a further RFID chip (24).

6. The RFID textile label as claimed in claim 3, **characterized in that** the auxiliary carrier (26) is made of plastic.

7. The RFID textile label as claimed in one of claims 1 to 6, **characterized in that** the antenna (4, 4a, 4b) has a metallic thread.

8. The RFID textile label as claimed in one of claims 1 to 6, **characterized in that** the antenna (4, 4a, 4b) has a conductively coated polymer thread.

## Revendications

1. Etiquette RFID pour produits textiles comportant une antenne ouverte (4, 4a, 4b) intégrée dans un support textile (2),
le support textile étant un tissu ou un tricot et l'antenne est intégrée suivant une forme de méandre au cours de la fabrication du produit sur un métier à tisser,
l'antenne (4, 4a, 4b) étant reliée par sa zone médiane à une puce RFID (12, 12a, 12b, 24),
étiquette **caractérisée en ce que**
l'antenne (4, 4a, 4b) comporte dans sa zone médiane une boucle (6, 6a, 6b) dont les flancs (8, 10) sont reliés à la puce RFID (12, 12a, 12b),
la boucle d'antenne (6, 6a, 6b) reliée à la puce RFID, servant d'antenne de champ H et les segments d'antenne (16, 16a, 16b, 18, 18a, 18b) situés à l'extérieur de la boucle de l'antenne servant d'antenne de champ E.

2. Etiquette RFID pour produits textiles selon la revendication 1,
**caractérisée en ce que**
la puce RFID (12, 12a) est reliée aux flancs (8, 10) de la boucle d'antenne (6, 6a) de préférence par soudage, brasage, collage, avec une colle électroconductrice.

3. Etiquette RFID pour produits textiles selon la revendication 1,
**caractérisée en ce que**
la puce RFID (12b) est installée sur un support auxiliaire (26) avec une boucle conductrice (28) à ses extrémités (30, 32), et
au moins par segments, la boucle conductrice (28) est parallèle à faible distance de la boucle d'antenne (6b), pour être couplée à celle-ci de manière inductive.

4. Etiquette RFID pour produits textiles selon la revendication 1,
**caractérisée en ce que**
la puce RFID (12b) est installée sur un support auxiliaire (26) avec une boucle conductrice (28) à ses extrémités (30, 32), et
la boucle conductrice (28) chevauche l'antenne (4, 4a, 4b) au moins en deux points ou la croise et elle est au moins partiellement parallèlement à celle-ci, à distance, avec couplage inductif réciproque.

5. Etiquette RFID pour produits textiles selon la revendication 1,
**caractérisée en ce que**
la boucle d'antenne (6a) est séparée du restant de l'antenne et elle est reliée à une autre puce RFID (24).

6. Etiquette RFID pour produits textiles selon la revendication 3,
**caractérisée en ce que**
le support auxiliaire (26) est en matière plastique.

7. Etiquette RFID pour produits textiles selon l'une des revendications 1 à 6,
**caractérisée en ce que**
l'antenne (4, 4a, 4b) comporte un fil métallique.

8. Etiquette RFID pour produits textiles selon l'une des revendications 1 à 6,
**caractérisée en ce que**
l'antenne (4, 4a, 4b) comporte un fil en polymère muni d'un revêtement conducteur.
